# EUROPEAN PATENT APPLICATION

(11) **EP 4 075 395 A2**
(43) Date of publication of application: **19.10.2022**
(21) Application number: 22192021.8
(22) Date of filing: 24.08.2022
(51) Int. Cl.: G06V 10/82, G06V 40/40, G06V 40/16

(54) **METHOD AND APPARATUS OF TRAINING ANTI-SPOOFING MODEL, METHOD AND APPARATUS OF PERFORMING ANTI-SPOOFING, AND DEVICE**

(30) Priority: 25.08.2021 CN 202110985438
(71) Applicant: Beijing Baidu Netcom Science Technology Co., Ltd., Beijing 100085 (CN)
(72) Inventor: FENG, Haocheng, Beijing, 100085 (CN); YUE, Haixiao, Beijing, 100085 (CN); WANG, Keyao, Beijing, 100085 (CN); ZHANG, Guosheng, Beijing, 100085 (CN)
(74) Representative: Carpmaels & Ransford LLP

(57) **Abstract**

The present disclosure provides a method and an apparatus of training an anti-spoofing model, and a method and an apparatus of performing anti-spoofing, which relate to a field of an artificial intelligence technology, in particular to fields of computer vision and deep learning technologies, and may be applied to scenarios such as face recognition. A specific implementation solution includes: inputting a plurality of sample images containing a target object into a feature extraction network of the anti-spoofing model to obtain an image feature of each sample image, wherein the each sample image is provided with a label indicating an actual probability that the target object belongs to a true category; inputting the image feature into a classification network of the anti-spoofing model to obtain a first prediction probability that the target object belongs to the true category; determining, according to a similarity between the image feature and each feature in a predetermined feature sequence, a second prediction probability that the target object belongs to a false category, wherein the each feature is an image feature of a first sample image being provided with a label indicating that the actual probability is zero; and training the anti-spoofing model according to the first prediction probability, the second prediction probability and the actual probability.

## Description

### TECHNICAL FIELD

The present disclosure relates to a field of an artificial intelligence technology, in particular to computer vision and deep learning technologies, and may be applied to scenarios such as a face recognition.

### BACKGROUND

With a development of a computer technology and a network technology, a deep learning technology has been widely used in various fields. For example, the deep learning technology may be used for anti-spoofing to effectively improve a detection accuracy. However, with the development of the computer technology, technologies of generating fake bodies are emerging in an endless stream. In a related art, the deep learning technology for anti-spoofing generally has a poor generalization ability, and it is difficult to ensure an effective recognition of fake bodies generated by various technologies.

### SUMMARY

The present disclosure provides a method and an apparatus of training an anti-spoofing model, a method and an apparatus of performing anti-spoofing using an anti-spoofing model, a device, and a medium, which may improve the generalization ability and the detection accuracy.

According to an aspect of the present disclosure, a method of training an anti-spoofing model is provided, wherein the anti-spoofing model includes a feature extraction network and a classification network; the method includes: inputting a plurality of sample images containing a target object into the feature extraction network to obtain a first image feature of each sample image in the plurality of sample images, wherein the each sample image is provided with a label indicating an actual probability that the target object belongs to a true category; inputting the first image feature into the classification network to obtain a first prediction probability that the target object in the each sample image belongs to the true category; determining, according to a similarity between the first image feature and each feature in a predetermined feature sequence, a second prediction probability that the target object in the each sample image belongs to a false category, wherein the each feature is a second image feature of a first sample image being provided with a label indicating that the actual probability is zero; and training the anti-spoofing model according to the first prediction probability, the second prediction probability and the actual probability.

According to another aspect of the present disclosure, a method of performing anti-spoofing using an anti-spoofing model is provided, wherein the anti-spoofing model includes a feature extraction network and a classification network; the method includes: inputting an image to be detected containing a target object into the feature extraction network to obtain a third image feature of the image to be detected; and inputting the third image feature into the classification network to obtain a probability that the target object in the image to be detected belongs to a true category, wherein the anti-spoofing model is trained using the method of training the anti-spoofing model described above.

According to another aspect of the present disclosure, an apparatus of training an anti-spoofing model is provided, wherein the anti-spoofing model comprises a feature extraction network and a classification network; the apparatus includes: a first feature generation module configured to input a plurality of sample images containing a target object into the feature extraction network to obtain a first image feature of each sample image in the plurality of sample images, wherein the each sample image is provided with a label indicating an actual probability that the target object belongs to a true category; a first prediction module configured to input the first image feature into the classification network to obtain a first prediction probability that the target object in the each sample image belongs to the true category; a second prediction module configured to determine, according to a similarity between the first image feature and each feature in a predetermined feature sequence, a second prediction probability that the target object in the each sample image belongs to a false category, wherein the each feature is a second image feature of a first sample image being provided with a label indicating that the actual probability is zero; and a model training module configured to train the anti-spoofing model according to the first prediction probability, the second prediction probability and the actual probability.

According to another aspect of the present disclosure, an apparatus of performing anti-spoofing using an anti-spoofing model is provided, wherein the anti-spoofing model includes a feature extraction network and a classification network; the apparatus includes: a second feature generation module configured to input an image to be detected containing a target object into the feature extraction network to obtain a third image feature of the image to be detected; and a probability determination module configured to input the third image feature into the classification network to obtain a probability that the target object in the image to be detected belongs to a true category, wherein the anti-spoofing model is trained using the apparatus of training the anti-spoofing model described above.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of training the anti-spoofing model and/or the method of performing anti-spoofing using the anti-spoofing model provided by the present disclosure.

According to another aspect of the present disclosure, a non-transitory computer-readable storage medium having computer instructions therein is provided, wherein the computer instructions are configured to cause a computer to implement the method of training the anti-spoofing model and/or the method of performing anti-spoofing using the anti-spoofing model provided by the present disclosure.

According to another aspect of the present disclosure, a computer program product containing a computer program is provided, wherein the computer program, when executed by a processor, causes the processor to implement the method of training the anti-spoofing model and/or the method of performing anti-spoofing using the anti-spoofing model provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure.
FIG. 1 shows a schematic diagram of an application scenario of a method and an apparatus of training an anti-spoofing model and a method and an apparatus of performing anti-spoofing according to embodiments of the present disclosure.
FIG. 2 shows a flowchart of a method of training an anti-spoofing model according to embodiments of the present disclosure.
FIG. 3 shows a schematic diagram of a method of training an anti-spoofing model according to embodiments of the present disclosure.
FIG. 4 shows a schematic structural diagram of an anti-spoofing model according to embodiments of the present disclosure.
FIG. 5 shows a flowchart of a method of performing anti-spoofing using an anti-spoofing model according to embodiments of the present disclosure.
FIG. 6 shows a structural block diagram of an apparatus of training an anti-spoofing model according to embodiments of the present disclosure.
FIG. 7 shows a structural block diagram of an apparatus of performing anti-spoofing using an anti-spoofing model according to embodiments of the present disclosure.
FIG. 8 shows a block diagram of an electronic device for implementing a method of training an anti-spoofing model and/or a method of performing anti-spoofing using an anti-spoofing model according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

Generally, an anti-spoofing model may be constructed using a feature binary classification-based method, or may be constructed using an anomaly detection-based method. The anti-spoofing model constructed using the feature binary classification-based method may firstly perform a feature extraction on an image so as to obtain an extracted feature, and then perform a binary classification on the extracted feature. The feature extraction may be performed using a traditional method or a deep neural network-based method, and the binary classification may be performed on the feature using a support vector machine or a fully connected network. The traditional method of performing the feature extraction may include a method using Local Binary Pattern (LBP), a method using Histogram of Oriented Gradients (HOG), etc. The deep neural network-based method may use a convolution neural network or a long short-term memory network to perform the feature extraction. The anomaly detection-based method may regard an image that contains a target object belonging to a true category (that is, a category of the target object is a real living body) as belonging to a normal category, and an image that contains a target object belonging to a false category (that is, a category of the target object is a fake body) as belong to an abnormal category. In a training process, the anomaly detection-based method may learn the features of the target object in the image belonging to the normal category, so that features of the target object belonging to the true category gather at a feature center, while features of the target object belonging to the false category are far away from the feature center.

The above-mentioned binary classification-based method in which the real living body and the fake body are regarded as belonging to two categories is not in line with an actual scene. Fake bodies obtained by different faking methods are generally significantly different. Classifying all fake bodies into one category is not conducive to the learning of the anti-spoofing model, and is easy to cause over-fitting of features of the fake bodies learned by the anti-spoofing model to a distribution of a training set, so that the anti-spoofing model may have a poor generalization effect. In the training process, the anomaly detection-based method only learns the features of real living bodies and lacks a fake body feature-based supervision, which may cause a technical problem of limited detection performance.

Based on this, the present disclosure provides a method of training an anti-spoofing model. The method may include a feature generation phase, a first prediction phase, a second prediction phase and a model training phase. The anti-spoofing model includes a feature extraction network and a classification network. In the feature generation phase, a plurality of sample images containing a target object are input into the feature extraction network to obtain a first image feature of each sample image in the plurality of sample images. The each sample image is provided with a label indicating an actual probability that the target object belongs to the true category. In the first prediction phase, the first image feature is input into the classification network to obtain a first prediction probability that the target object in each sample image belongs to the true category. In the second prediction phase, a second prediction probability that the target object in each sample image belongs to the false category is determined according to a similarity between the first image feature and each feature in a predetermined feature sequence, and the each feature is a second image feature of a first sample image provided with a label indicating that the actual probability is zero. In the model training phase, the anti-spoofing model is trained according to the first prediction probability, the second prediction probability and the actual probability. It is expected that the trained anti-spoofing model may overcome problems of the anti-spoofing model constructed using conventional methods.

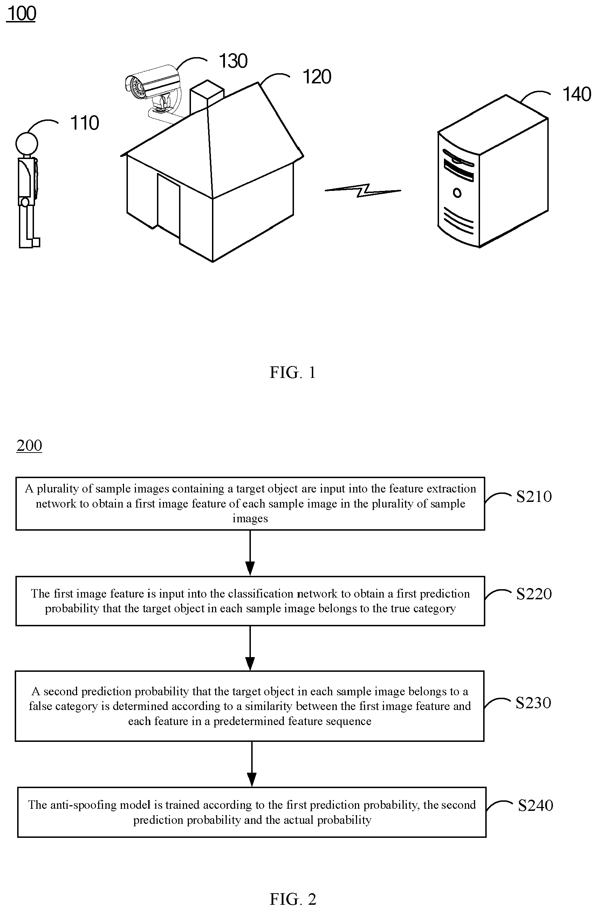

An application scenario of the method and the apparatus provided by the present disclosure will be described below with reference to FIG. 1.

FIG. 1 shows a schematic diagram of an application scenario of a method and an apparatus of training an anti-spoofing model and a method and an apparatus of performing anti-spoofing according to an embodiment of the present disclosure.

As shown in FIG. 1, an application scenario 100 of this embodiment may include a resident 110, a building 120, an image acquisition device 130, and an electronic device 140. The image acquisition device 130 may communicate with the electronic device 140 through a network or a short-range communication protocol.

An entrance door of the building 120 may be, for example, a smart door. The electronic device 140 may, for example, control opening and closing of the entrance door. The image acquisition device 130 may be used to, for example, acquire a face image of the resident 110 walking towards the entrance door, and transmit the face image to the electronic device 140, so that the electronic device 140 may perform anti-spoofing and face recognition on the face image. When it is detected and determined that a face in the face image is a real face of a predetermined user, an opening instruction may be transmitted to the entrance door to achieve an intelligent opening of the entrance door.

In an embodiment, the electronic device 140 may be, for example, a terminal device provided in the building 120 and having a display screen, or a remote control server, etc.

In an embodiment, the electronic device 140 may detect whether the face in the face image is a real face, for example, by using an anti-spoofing model. The anti-spoofing model may be trained by a server communicatively connected with the electronic device 140, or may be pre-trained by the electronic device 140.

It should be noted that the method of training the anti-spoofing model provided by the present disclosure may generally be performed by the electronic device 140, or by a server communicatively connected with the electronic device 140. Accordingly, the apparatus of training the anti-spoofing model provided by the present disclosure may be provided in the electronic device 140 or in a server communicatively connected with the electronic device 140. The method of performing anti-spoofing using the anti-spoofing model provided by the present disclosure may be performed by the electronic device 140. Accordingly, the apparatus of performing anti-spoofing using the anti-spoofing model provided by the present disclosure may be provided in the electronic device 140.

It should be understood that the number and type of image acquisition device, building and electronic device as well as the number of resident in FIG. 1 are only schematic. According to implementation needs, there may be any number and type of image acquisition devices, buildings and electronic devices and any number of residents.

It may be understood that the application scenario in FIG. 1 is only an example to facilitate understanding of the present disclosure, in which the target object is a face. The method provided by the present disclosure may also be applied to a variety of scenarios such as a target classification, a target detection, a target recognition, a target segmentation, a target prediction, etc. In other scenarios, the target object may be various objects with real physiological characteristics, such as eyes, animal faces, etc. The sample images used in the present disclosure are all acquired from a public dataset. The trained anti-spoofing model is not a model for a specific user, and a personal information of a specific user may not be obtained using this model.

The method of training the anti-spoofing model provided by the present disclosure will be described below in detail through FIG. 2 to FIG. 4 in combination with FIG. 1.

FIG. 2 shows a flowchart of a method of training an anti-spoofing model according to an embodiment of the present disclosure.

As shown in FIG. 2, a method 200 of training an anti-spoofing model of this embodiment includes operation S210 to operation S240. The anti-spoofing model may include a feature extraction network and a classification network.

In operation S210, a plurality of sample images containing a target object are input into the feature extraction network to obtain a first image feature of each sample image in the plurality of sample images.

According to embodiments of the present disclosure, a plurality of image data containing the target object may be acquired from a public dataset, and labels may be added to the plurality of image data according to predetermined determination results. The added label may be an information indicating an actual category of the target object in the image data. For example, if the actual category is a true category, a label "1" may be added to the image data, otherwise a label "0" may be added to the image data. The label may also indicate an actual probability that the target object in the image data belongs to the true category. For example, if the label is "1", the actual probability is 1; if the label is "0", the actual probability is 0. It may be understood that the added label is only used as an example to facilitate the understanding of the present disclosure, and is not limited in the present disclosure.

The plurality of image data provided with labels may be used as sample images. For example, the sample images may be divided into groups, and each group of sample images includes a predetermined number of sample images. Each group of sample images may be input to the feature extraction network at the same time as a batch of training data, so as to obtain an image feature of each sample image in the each group of sample images. The predetermined number may be set according to actual needs, which is not limited in the present disclosure.

For example, a convolutional neural network, such as a Residual Neural Network (ResNet) or a network designed for a deep learning application of a mobile terminal and an embedded terminal (e.g., Mobile Net), etc. may be used as the feature extraction network, which is not limited in the present disclosure.

In an embodiment, a size of each sample image is set to HxW, the number of channels of each sample image is G, and the number of sample images in a batch of training data is N, then data input to the feature extraction network may have a size of H×W×G×N. After the data is processed by the feature extraction network, a feature vector may be obtained for each sample image. For the N sample images, feature data output by the feature extraction network may be, for example, an N×D feature matrix. Each row of data in the feature matrix constitutes a feature vector for a sample image, and the feature vector for each sample image contains D elements.

In operation S220, the first image feature is input into the classification network to obtain a first prediction probability that the target object in each sample image belongs to the true category.

According to embodiments of the present disclosure, the classification network may be, for example, a fully connected network. An input of the classification network is the first image feature output by the feature extraction network. For example, if the number of sample images in a batch of training data is N, the input of the classification network may be an N×D feature matrix. An output of the classification network is a probability vector. The probability vector contains N elements, which respectively represent the prediction probability that the target object contained in each sample image in the N sample images belongs to the true category. Therefore, through the processing of the classification network, the first prediction probability that the target object in each sample image belongs to the true category may be obtained.

In an embodiment, the classification network may be set with a plurality of weight parameters, which constitute a weight vector. The classification network may calculate an inner product between the first image feature of each sample image and the weight vector, so as to obtain the prediction probability that the target object in each sample image belongs to the true category. In this way, the number of weight parameters in the weight vector may be equal to the number of elements in the feature vector described above.

In operation S230, a second prediction probability that the target object in each sample image belongs to a false category is determined according to a similarity between the first image feature and each feature in a predetermined feature sequence.

According to embodiments of the present disclosure, a cosine similarity, Pearson correlation coefficient or Jaccard index between the first image feature and the each feature may be firstly calculated to obtain a calculated value, and the calculated value may be used as the similarity between the first image feature and the each feature. By calculating the similarity between the first image feature and each feature in the predetermined feature sequence, a similarity vector may be obtained, and the number of elements in the similarity vector is equal to the number of features in the predetermined feature sequence. In this embodiment, an average value or root mean square of the various elements in the similarity vector, or a greatest value or smallest value of the plurality of elements may be determined as the second prediction probability that the target object in the sample image belongs to the false category.

In an embodiment, after the first image feature of each sample image is obtained, an inner product between the first image feature and each feature in the predetermined feature sequence may be calculated, and the calculated inner product may represent the similarity between the first image feature and the each feature. For each first image feature, a similarity vector between the first image feature and the feature sequence may be obtained. A value of each element in the similarity vector indicates a probability value that the target object in the sample image belongs to a same category as a target object in an image corresponding to each feature. In this embodiment, after the similarity vector is obtained, a greatest value in the similarity vector may be determined as the second prediction probability that the target object in the sample image belongs to the false category.

According to embodiments of the present disclosure, each feature in the predetermined feature sequence may be a second image feature of a first sample image provided with a label indicating that the actual probability is zero. For example, in this embodiment, prior to the training of the anti-spoofing model, a plurality of sample images containing a target object belonging to the false category (i.e., negative samples) may be pre-selected from a plurality of image data provided with labels. Then, an image feature of each negative sample may be obtained using the above-mentioned feature extraction network, and the image features of the plurality of negative samples constitute the predetermined feature sequence. Alternatively, a plurality of unit feature vectors may be randomly generated, and the plurality of unit feature vectors constitute the predetermined feature sequence. When the unit feature vectors are randomly generated, for example, constraints may be added so that the generated unit feature vectors have information of the image features of the negative samples.

The number of features in the predetermined feature sequence may be set according to actual needs, which is not limited in the present disclosure. A size of each feature in the predetermined feature sequence may be, for example, equal to the size of the first image feature obtained above.

In operation S240, the anti-spoofing model is trained according to the first prediction probability, the second prediction probability and the actual probability.

According to embodiments of the present disclosure, a loss of the anti-spoofing model may be determined according to a difference between the first prediction probability and the actual probability and a difference between the second prediction probability and the actual probability, and a parameter in the anti-spoofing model may be adjusted using a back propagation algorithm to reduce the loss of the anti-spoofing model.

In this embodiment, a plurality of input sample images may be input, and a probability group may be obtained for each sample image, then a plurality of probability groups may be obtained. Each probability group includes a first prediction probability, a second prediction probability and an actual probability. In this embodiment, a loss may be obtained according to each probability group, then a plurality of losses may be obtained. The loss of the anti-spoofing model may be obtained after a superimposition of the plurality of losses.

According to embodiments of the present disclosure, after the sample images are divided into a plurality of groups, the anti-spoofing model may be trained successively according to the plurality of groups of sample images, until the loss of the anti-spoofing model is less than a predetermined value, or training times of the anti-spoofing model reach a predetermined number. The predetermined value and the predetermined number of times may be set according to actual needs, which is not limited in the present disclosure.

According to embodiments of the present disclosure, in a process of training the anti-spoofing model, the values of the weight parameters in the classification network may be adjusted according to the loss of the anti-spoofing model, so that an inner product between the weight vector composed of the plurality of weight parameters and the image feature of the positive sample (i.e., the sample image containing the target object belonging to the true category) increases, and an inner product between the weight vector and the image feature of the negative sample decreases. In this way, the image features of the positive samples may be gathered at the same center, while the image features of the negative samples are far away from the center. Thus, the anti-spoofing model may accurately distinguish the target object belonging to the true category from the target object belonging to the false category.

To sum up, in the method of training the anti-spoofing model of embodiments of the present disclosure, by constructing the predetermined feature sequence according to the negative samples, and determining the second prediction probability that the target object belongs to the false category according to the similarity between the image feature of the sample image and each feature in the predetermined feature sequence, a multi-classification of the false category may be achieved, and an accuracy of the obtained second prediction probability may be improved. By training the anti-spoofing model with reference to the second prediction probability, a supervision of negative sample features may be achieved, and the accuracy and the generalization ability of the model may be improved. If the number of features in the predetermined feature sequence is set to a value far greater than 1, the false category may be approximately divided into infinite categories, and the generalization ability of the model may be maximized.

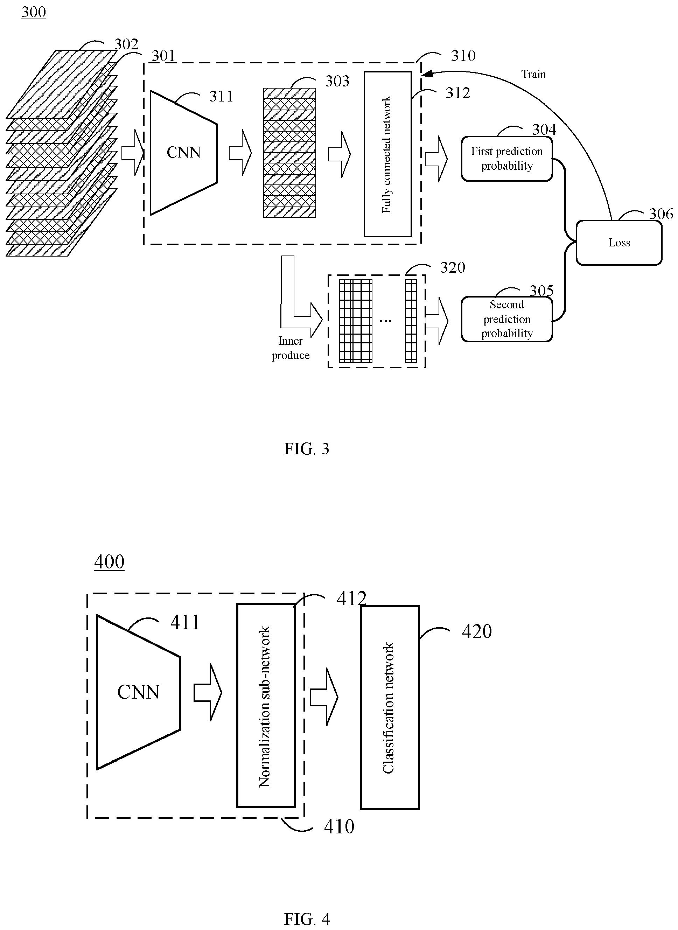

FIG. 3 shows a schematic diagram of a method of training an anti-spoofing model according to an embodiment of the present disclosure.

As shown in FIG. 3, in an embodiment 300, an anti-spoofing model 310 and a predetermined feature sequence 320 may be provided. The anti-spoofing model 310 includes a feature extraction network 311 and a classification network 312. The feature extraction network 311 may be a Convolutional Neural Network (CNN), and the classification network 312 may be a fully connected network.

When training the anti-spoofing model 310, a group of sample images including positive samples 301 and negative samples 302 may be input into the CNN, and processed by the CNN to output a feature matrix. The feature matrix 303 includes the same number of feature vectors as the images in the group of sample images. After the feature matrix 303 is input into the classification network 312 and processed by the classification network 312, a first prediction probability 304 may be obtained. In essence, the output of the classification network 312 is a probability vector, and each element in the probability vector represents the first prediction probability that the target object in a sample image belongs to the true category. At the same time, an inner product between each feature vector in the feature matrix 303 and each feature in a predetermined feature sequence 320 may be calculated, and a second prediction probability 305 that the target object in each sample image belongs to the false category may be obtained using a method similar to the operation S230 described above. Finally, a loss 306 of the anti-spoofing model may be calculated according to the first prediction probability 304, the second prediction probability 305 and the actual probability indicated by the label of the sample image. The anti-spoofing model may then be trained according to the loss 306.

According to embodiments of the present disclosure, the loss of the anti-spoofing model 310 may be determined using a cross entropy loss function according to the first prediction probability 304, the second prediction probability 305 and the actual probability. Specifically, the first prediction probability, the second prediction probability and the actual probability may be substituted into the cross entropy loss function for calculation, and a value of the cross entropy loss function obtained by the calculation may be used as the loss of the anti-spoofing model.

According to embodiments of the present disclosure, for example, the features in the predetermined feature sequence 320 may be dynamically updated. For example, the predetermined feature sequence may be in a form of a queue. In the process of training the anti-spoofing model, after the second prediction probability is obtained according to a current predetermined feature sequence, the current predetermined feature sequence may be updated using an image feature of a second sample image in the plurality of sample images. The second sample image is a sample provided with a label indicating that the actual probability is zero, that is, the aforementioned negative sample. When updating the predetermined feature sequence, a feature firstly entering the queue in the predetermined feature sequence (that is, a feature at a head of the queue) may be deleted, and the image feature of the second sample image may be inserted to a tail of the predetermined feature sequence. By dynamically updating the predetermined feature sequence, the model may continuously learn differences between real living bodies and fake bodies obtained by different faking technologies in the model training process, so that the generalization ability and detection accuracy of the obtained anti-spoofing model may be improved.

FIG. 4 shows a schematic structural diagram of an anti-spoofing model according to embodiments of the present disclosure.

As shown in FIG. 4, in an embodiment, the anti-spoofing model 400 includes a feature extraction network 410 and a classification network 420, and the feature extraction network 410 may include a feature extraction sub-network 411 and a normalization sub-network 412. The feature extraction sub-network 411 may be a CNN and the like described above, and may be used to extract the feature of each sample image. The normalization sub-network 412 is used to normalize the feature extracted by the feature extraction sub-network 411 so that the value of each element in the output feature vector is in a range of [0, 1].

According to embodiments of the present disclosure, the first image feature obtained above may be a feature obtained after processing through the normalization sub-network 412. That is, in the operation of obtaining the first image feature described above, the plurality of sample images may be firstly input into the feature extraction sub-network 411 to obtain an initial feature of each sample image in the plurality of sample images. Then, the initial feature of each sample image may be input into the normalization sub-network 412, and the normalization sub-network 412 outputs the first image feature of each sample image.

In embodiments of the present disclosure, by providing the normalization sub-network for the feature extraction network, the accuracy of the image feature extracted by the feature extraction network may be improved, and thus the detection accuracy of the anti-spoofing model may be improved. Considering that image data in different data fields may be quite different, if non-normalized features are directly used for classification, there may be a problem of inaccurate classification results due to a use of the same classification standard for different data fields.

According to embodiments of the present disclosure, after the sample images are obtained, for example, the plurality of sample images may be divided into a training sample set and a test sample set. Then, the plurality of sample images in the training sample set may be divided into a plurality of groups to train the anti-spoofing model. After the anti-spoofing model is trained, the test sample set may be used to test the trained anti-spoofing model. Specifically, the sample images in the test sample set may be input into the anti-spoofing model, the image features of the sample images in the test sample set may be extracted successively, and the prediction probability that the target object belongs to the true category may be obtained. The accuracy of the trained anti-spoofing model may be obtained according to a difference between the prediction probability and the actual probability indicated by the label of the sample image in the test sample set. In a process of testing the trained anti-spoofing model, it is not needed to determine the prediction probability that the target object in the sample image belongs to the false category according to the predetermined feature sequence.

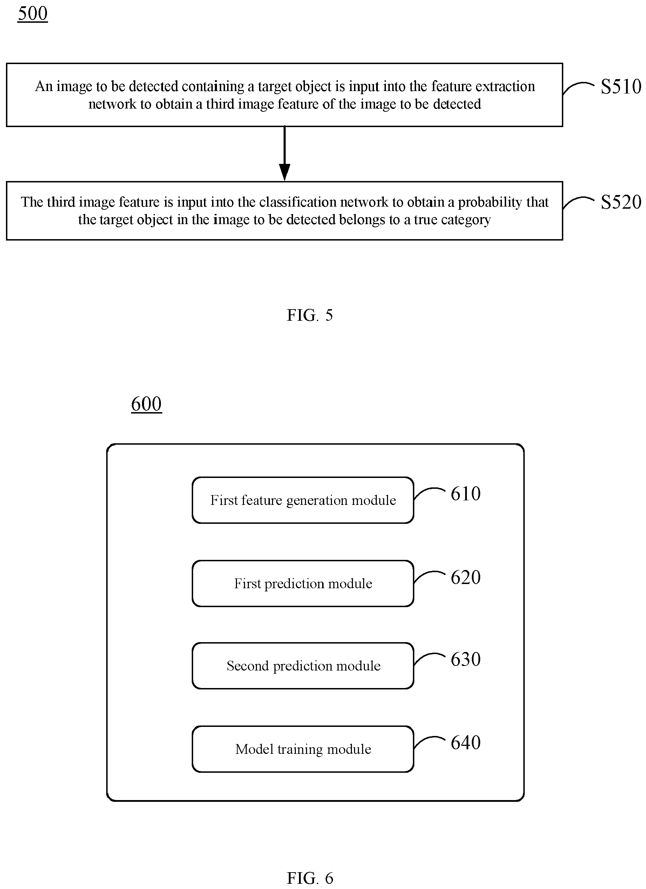

Based on the method of training the anti-spoofing model provided by the present disclosure, the present disclosure further provides a method of performing anti-spoofing using an anti-spoofing model. This method will be described in detail below with reference to FIG. 5.

FIG. 5 shows a flowchart of a method of performing anti-spoofing using an anti-spoofing model according to an embodiment of the present disclosure.

As shown in FIG. 5, the method of performing anti-spoofing using the anti-spoofing model in this embodiment may include operation S510 to operation S520. The anti-spoofing model includes a feature extraction network and a classification network. The anti-spoofing model may be trained using the method of training the anti-spoofing model described above.

In operation S510, an image to be detected containing a target object is input into the feature extraction network to obtain a third image feature of the image to be detected. The image to be detected may be an image acquired in real time by the image acquisition device. The operation S510 is similar to the operation S210 described above, and the third image feature is similar to the first image feature described above, which will not be described in detail here.

In operation S520, the third image feature is input into the classification network to obtain a probability that the target object in the image to be detected belongs to a true category. The operation S520 is similar to the operation S220 described above, which will not be described in detail here.

After the probability that the target object in the image to be detected belongs to the true category is obtained, the probability may be compared with a probability threshold. If the probability that the target object belongs to the true category is greater than the probability threshold, it may be determined that the target object is a real living body. Otherwise, it may be determined that the target object is a fake body. The probability threshold may be set according to actual needs. For example, the probability threshold may be any value greater than 0.5, such as 0.8, which is not limited in the present disclosure.

In embodiments of the present disclosure, by using the anti-spoofing model trained by the method described above, the accuracy of anti-spoofing may be improved without additional calculation, and an effect of defense against various attacks in various scenarios such as security, finance, access control, etc. may be improved, so that the anti-spoofing method may be widely promoted and a user experience may be improved.

Based on the method of training the anti-spoofing model provided by the present disclosure, the present disclosure further provides an apparatus of training an anti-spoofing model. The apparatus will be described in detail below with reference to FIG. 6.

FIG. 6 shows a structural block diagram of an apparatus of training an anti-spoofing model according to embodiments of the present disclosure.

As shown in FIG. 6, an apparatus 600 of training an anti-spoofing model includes a first feature generation module 610, a first prediction module 620, a second prediction module 630, and a model training module 640. The anti-spoofing model includes a feature extraction network and a classification network.

The first feature generation module 610 is used to input a plurality of sample images containing a target object into the feature extraction network to obtain a first image feature of each sample image in the plurality of sample images. Each sample image is provided with a label indicating an actual probability that the target object belongs to a true category. In an embodiment, the first feature generation module 610 may be used to perform the operation S210 described above, which will not be described in detail here.

The first prediction module 620 is used to input the first image feature into the classification network to obtain a first prediction probability that the target object in each sample image belongs to the true category. In an embodiment, the first prediction module 620 may be used to perform the operation S220 described above, which will not be described in detail here.

The second prediction module 630 is used to determine a second prediction probability that the target object in each sample image belongs to a false category, according to a similarity between the first image feature and each feature in a predetermined feature sequence. The each feature is a second image feature of a first sample image provided with a label indicating that the actual probability is zero. In an embodiment, the second prediction module 630 may be used to perform the operation S230 described above, which will not be described in detail here.

The model training module 640 is used to train the anti-spoofing model according to the first prediction probability, the second prediction probability and the actual probability. In an embodiment, the model training module 640 may be used to perform the operation S240 described above, which will not be described in detail here.

According to embodiments of the present disclosure, the predetermined feature sequence is in a form of a queue. The apparatus 600 of training the anti-spoofing model may further include a sequence update module used to update the predetermined feature sequence by using a first image feature of a second sample image in the plurality of sample images. The second sample image is provided with a label indicating that the actual probability is zero.

According to embodiments of the present disclosure, the second prediction module 630 may include a vector generation sub-module and a probability determination sub-module. The vector generation sub-module is used to determine an inner product between the first image feature and each feature in the feature sequence, so as to obtain a similarity vector between the first image feature and the feature sequence. A value of each element in the similarity vector indicates a probability value that the target object in each sample image belongs to the same category as the target object in the first sample image. The probability determination sub-module is used to determine a greatest value in the similarity vector as the second prediction probability that the target object in each sample image belongs to the false category.

According to embodiments of the present disclosure, the feature extraction network includes a feature extraction sub-network and a normalization sub-network. The first feature generation module may include a feature extraction sub-module and a normalization sub-module. The feature extraction sub-module is used to input a plurality of sample images into the feature extraction sub-network to obtain an initial feature of each sample image in the plurality of sample images. The normalization sub-module is used to input the initial feature of each sample image into the normalization sub-network to obtain the first image feature of each sample image.

According to embodiments of the present disclosure, the model training module 640 may include a loss determination sub-module and a training sub-module. The loss determination sub-module is used to determine a loss of the anti-spoofing model using a cross entropy loss function according to the first prediction probability, the second prediction probability and the actual probability. The training sub-module is used to train the anti-spoofing model according to the loss.

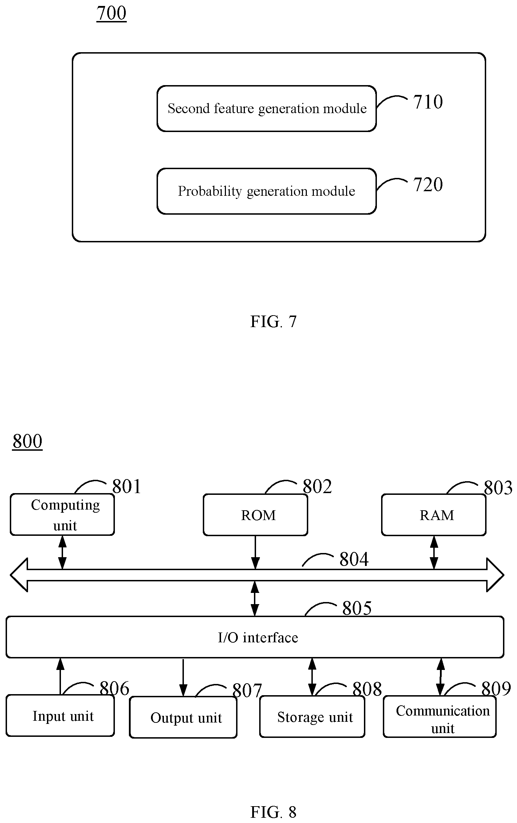

Based on the method of performing anti-spoofing using the anti-spoofing model provided by the present disclosure, the present disclosure further provides an apparatus of performing anti-spoofing using an anti-spoofing model. The apparatus will be described in detail below with reference to FIG. 7.

FIG. 7 shows a structural block diagram of an apparatus of performing anti-spoofing using an anti-spoofing model according to an embodiment of the present disclosure.

As shown in FIG. 7, an apparatus 700 of performing anti-spoofing using an anti-spoofing model of this embodiment may include a second feature generation module 710 and a probability determination module 720. The anti-spoofing model includes a feature extraction network and a classification network. For example, the anti-spoofing model may be trained using the apparatus of training the anti-spoofing model described above.

The second feature generation module 710 is used to input an image to be detected containing a target object into the feature extraction network to obtain a third image feature of the image to be detected. In an embodiment, the second feature generation module 710 may be used to perform the operation S510 described above, which will not be described in detail here.

The probability determination module 720 is used to input the third image feature into the classification network to obtain a probability that the target object in the image to be detected belongs to the true category. In an embodiment, the probability determination module 720 may be used to perform the operation S520 described above, which will not be described in detail here.

It should be noted that in the technical solution of the present disclosure, an acquisition, a collection, a storage, an application, a processing, a transmission, a provision and a disclosure of user personal information involved comply with provisions of relevant laws and regulations, and do not violate public order and good custom.

According to embodiments of the present disclosure, the present disclosure further provides an electronic device, a readable storage medium, and a computer program product.

FIG. 8 shows a schematic block diagram of an exemplary electronic device 800 for implementing the method of training the anti-spoofing model and/or the method of performing anti-spoofing using the anti-spoofing model of embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and processes described above, such as the method of training the anti-spoofing model and/or the method of performing anti-spoofing using the anti-spoofing model. For example, in some embodiments, the method of training the anti-spoofing model and/or the method of performing anti-spoofing using the anti-spoofing model may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the method of training the anti-spoofing model and/or the method of performing anti-spoofing using the anti-spoofing model described above. Alternatively, in other embodiments, the computing unit 801 may be configured to perform the method of training the anti-spoofing model and/or the method of performing anti-spoofing using the anti-spoofing model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to solve shortcomings of difficult management and weak business scalability existing in a traditional physical host and VPS (Virtual Private Server) service. The server may also be a server of a distributed system or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of training an anti-spoofing model, wherein the anti-spoofing model comprises a feature extraction network and a classification network; the method comprises:
inputting (S210) a plurality of sample images containing a target object into the feature extraction network to obtain a first image feature of each sample image in the plurality of sample images, wherein the each sample image is provided with a label indicating an actual probability that the target object belongs to a true category;
inputting (S220) the first image feature into the classification network to obtain a first prediction probability that the target object in the each sample image belongs to the true category;
determining (S230), according to a similarity between the first image feature and each feature in a predetermined feature sequence, a second prediction probability that the target object in the each sample image belongs to a false category, wherein the each feature is a second image feature of a first sample image being provided with a label indicating that the actual probability is zero; and
training (S240) the anti-spoofing model according to the first prediction probability, the second prediction probability and the actual probability.

2. The method of claim 1, wherein the predetermined feature sequence is in a form of a queue; and the method further comprises: subsequent to determining the second prediction probability that the target object in the each sample image belongs to the false category,
updating the predetermined feature sequence by using a first image feature of a second sample image in the plurality of sample images, wherein the second sample image is provided with a label indicating that the actual probability is zero.

3. The method of claim 1 or 2, wherein the determining a second prediction probability that the target object in the each sample image belongs to a false category comprises:
determining an inner product between the first image feature and each feature in the feature sequence, so as to obtain a similarity vector between the first image feature and the feature sequence, wherein a value of each element in the similarity vector indicates a probability value that the target object in the each sample image belongs to a same category as the target object in the first sample image; and
determining a greatest value in the similarity vector as the second prediction probability that the target object in the each sample image belongs to the false category.

4. The method of claim 1 or 2, wherein the feature extraction network comprises a feature extraction sub-network and a normalization sub-network; and the inputting a plurality of sample images containing a target object into the feature extraction network to obtain a first image feature of each sample image in the plurality of sample images comprises:
inputting the plurality of sample images into the feature extraction sub-network to obtain an initial feature of each sample image in the plurality of sample images; and
inputting the initial feature of the each sample image into the normalization sub-network to obtain the first image feature of the each sample image.

5. The method of claim 1 or 2, wherein the training the anti-spoofing model comprises:
determining a loss of the anti-spoofing model using a cross entropy loss function according to the first prediction probability, the second prediction probability and the actual probability; and
training the anti-spoofing model according to the loss.

6. A method (500) of performing anti-spoofing using an anti-spoofing model, wherein the anti-spoofing model comprises a feature extraction network and a classification network; the method comprises:
inputting (S510) an image to be detected containing a target object into the feature extraction network to obtain a third image feature of the image to be detected; and
inputting (S520) the third image feature into the classification network to obtain a probability that the target object in the image to be detected belongs to a true category,
wherein the anti-spoofing model is trained using the method of any one of claims 1 to 5.

7. An apparatus (600) of training an anti-spoofing model, wherein the anti-spoofing model comprises a feature extraction network and a classification network; the apparatus comprises:
a first feature generation module (610) configured to input a plurality of sample images containing a target object into the feature extraction network to obtain a first image feature of each sample image in the plurality of sample images, wherein the each sample image is provided with a label indicating an actual probability that the target object belongs to a true category;
a first prediction module (620) configured to input the first image feature into the classification network to obtain a first prediction probability that the target object in the each sample image belongs to the true category;
a second prediction module (630) configured to determine, according to a similarity between the first image feature and each feature in a predetermined feature sequence, a second prediction probability that the target object in the each sample image belongs to a false category, wherein the each feature is a second image feature of a first sample image being provided with a label indicating that the actual probability is zero; and
a model training module (640) configured to train the anti-spoofing model according to the first prediction probability, the second prediction probability and the actual probability.

8. The apparatus of claim 7, wherein the predetermined feature sequence is in a form of a queue; and the apparatus further comprises:
a sequence update module configured to update the predetermined feature sequence by using a first image feature of a second sample image in the plurality of sample images, wherein the second sample image is provided with a label indicating that the actual probability is zero.

9. The apparatus of claim 7 or 8, wherein the second prediction module comprises:
a vector generation sub-module configured to determine an inner product between the first image feature and each feature in the feature sequence, so as to obtain a similarity vector between the first image feature and the feature sequence, wherein a value of each element in the similarity vector indicates a probability value that the target object in the each sample image belongs to a same category as the target object in the first sample image; and
a probability determination sub-module configured to determine a greatest value in the similarity vector as the second prediction probability that the target object in the each sample image belongs to the false category.

10. The apparatus of claim 7 or 8, wherein the feature extraction network comprises a feature extraction sub-network and a normalization sub-network; and the first feature generation module comprises:
a feature extraction sub-module configured to input the plurality of sample images into the feature extraction sub-network to obtain an initial feature of each sample image in the plurality of sample images; and
a normalization sub-module configured to input the initial feature of the each sample image into the normalization sub-network to obtain the first image feature of the each sample image.

11. The apparatus of claim 7 or 8, wherein the model training module comprises:
a loss determination sub-module configured to determine a loss of the anti-spoofing model using a cross entropy loss function according to the first prediction probability, the second prediction probability and the actual probability; and
a training sub-module configured to train the anti-spoofing model according to the loss.

12. An apparatus (700) of performing anti-spoofing using an anti-spoofing model, wherein the anti-spoofing model comprises a feature extraction network and a classification network; the apparatus comprises:
a second feature generation module (710) configured to input an image to be detected containing a target object into the feature extraction network to obtain a third image feature of the image to be detected; and
a probability determination module (720) configured to input the third image feature into the classification network to obtain a probability that the target object in the image to be detected belongs to a true category,
wherein the anti-spoofing model is trained using the apparatus of any one of claims 7 to 11.

13. An electronic device (800), comprising:
at least one processor (801); and
a memory communicatively connected to the at least one processor, wherein the memory stores instructions executable by the at least one processor, and the instructions, when executed by the at least one processor, cause the at least one processor to implement the method of any one of claims 1 to 6.

14. A non-transitory computer-readable storage medium having computer instructions therein, wherein the computer instructions are configured to cause a computer to implement the method of any one of claims 1 to 6.

15. A computer program product containing a computer program, wherein the computer program, when executed by a processor, causes the processor to implement the method of any one of claims 1 to 6.
